(19) Europäisches Patentamt European Patent Office Office européen des brevets

(11) **EP 4 614 330 B1**

(12) **FASCICULE DE BREVET EUROPEEN**

(45) Date de publication et mention de la délivrance du brevet:
**29.04.2026 Bulletin 2026/18**

(21) Numéro de dépôt: **25161059.8**

(22) Date de dépôt: **28.02.2025**

(51) Classification Internationale des Brevets (IPC):
***G06F 11/10*** *(2006.01)*

(52) Classification Coopérative des Brevets (CPC):
**G06F 11/1048;** G06F 11/1068

(54) **PROCÉDÉ ET DISPOSITIF DE CORRECTION D'ERREURS DANS LES MÉMOIRES RÉSISTIVES OU LES MÉMOIRES FLASH**

VERFAHREN UND VORRICHTUNG ZUR FEHLERKORREKTUR IN RESISTIVEN SPEICHERN ODER FLASH-SPEICHERN

METHOD AND DEVICE FOR CORRECTING ERRORS IN RESISTIVE MEMORIES OR FLASH MEMORIES

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **07.03.2024 FR 2402306**

(43) Date de publication de la demande:
**10.09.2025 Bulletin 2025/37**

(73) Titulaire: **Commissariat à l'Energie Atomique et aux Energies Alternatives**
**75015 Paris (FR)**

(72) Inventeur: **GHERMAN, Valentin**
**38054 GRENOBLE CEDEX 09 (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
**US-A1- 2021 143 836**

• **GHERMAN VALENTIN ET AL: "Error correction improvement based on weak-bit-flipping for resistive memories", vol. 136, 1 September 2022 (2022-09-01), GB, pages 114669, XP093193735, ISSN: 0026-2714, Retrieved from the Internet <URL:https://dx.doi.org/10.1016/j.microrel.2022.114669> [retrieved on 20240808], DOI: 10.1016/j.microrel.2022.114669**

**Description**

**Domaine technique**

L'invention se situe dans le domaine des mémoires résistives ou des mémoires flash, et concerne plus particulièrement un procédé et un dispositif permettant d'améliorer la correction d'erreurs dans de telles mémoires.

**Etat de la technique**

Les mémoires résistives RRAM pour « Resistive Random Access Memory » selon la terminologie anglo-saxonne, sont des mémoires non-volatiles présentant une vitesse de fonctionnement élevée, une faible consommation d'énergie électrique et une grande durée de vie. Pour ces raisons, les mémoires résistives sont parmi les technologies mémoire les plus prometteuses pour remplacer à la fois les mémoires vives et les mémoires non-volatiles actuelles telles que les mémoires de type flash.

Il existe plusieurs technologies de mémoires résistives. On peut notamment citer les mémoires résistives à pont conducteur, également appelées CBRAM (pour « Conductive-Bridging Random-Access Memory » selon la terminologie anglo-saxonne), ou les mémoires résistives à base d'oxyde, également appelées OxRAM (pour « Oxide-based Random-Access Memory » selon la terminologie anglo-saxonne), ou encore les mémoires à changement de phase, également appelées PCM (pour « Phase Change Memory » selon la terminologie anglo-saxonne).

Une mémoire résistive est composée d'une multitude de cellules mémoires résistives agencées en lignes et colonnes de manière à former une matrice. Une cellule mémoire RRAM est dotée d'au moins un élément résistif dont on peut modifier la conductance électrique.

Un facteur limitant leur large adoption sur le marché reste les taux d'erreurs importants lors des opérations de lecture. Le taux d'erreurs ou BER comme acronyme de l'anglicisme « Bit Error Rate », est impacté du fait de glissements des valeurs HRS (pour « High Resistance State » selon la terminologie anglo-saxonne) ou LRS (pour « Low Resistance State » selon la terminologie anglo-saxonne) des résistances programmées dans les mémoires. L'article de B. Giraud et al., « Benefits of Design Assist Techniques on Performances and Reliability of a RRAM Macro » - DOI: 1 0.11 09/IMW56887.2023.1 0145984, décrit plus en détail ce phénomène connu.

Il est aussi à noter que même si la technologie des mémoires flash de type NAND est mature et continue à dominer le marché des mémoires électroniques utilisées dans les dispositifs de stockage de masse, ces mémoires peuvent aussi souffrir d'un taux d'erreurs non-négligeable dès lors qu'on essaie de stocker plusieurs bits par cellule et/ou quand elles sont soumises à un large nombre de cycles d'écriture/effacement. Le livre blanc IDC de N. Sundby et D. Taylor, « Beyond capacity: storage architecture choices for the modern datacenter », publié par IDC Analyze the Future, parcourt ces éléments.

Une solution connue pour adresser un taux d'erreurs important affectant une mémoire de l'un de ces types, est d'utiliser une protection à base de code correcteur d'erreurs ou ECC pour l'acronyme anglais de « Error Correcting Code ».

Un code correcteur peut être implémenté en ajoutant un encodeur et un décodeur ECC à l'intérieur ou à proximité du contrôleur mémoire. Généralement, un contrôleur mémoire est le circuit électronique dont la fonction est de traduire des requêtes, en général en provenance d'un système électronique hôte, de lecture ou d'écriture sur des systèmes mémoire.

Le principe général lors de l'encodage de données avec un ECC est d'ajouter des bits de vérification aux bits de données à l'aide d'un encodeur. Les bits de vérification sont calculés à partir des bits de données et l'ensemble forme un mot de code. Lors d'une opération de décodage via un décodeur ECC, la présence des bits de vérification permet la détection et la correction des erreurs affectant aussi bien des bits de données que des bits de vérification.

Les mots de code d'un ECC binaire et linéaire peuvent être définis à travers l'équation suivante:

$$H \cdot v = 0 \qquad\qquad\qquad (1),$$

où $v$ est un vecteur correspondant à un mot de code, et où $H$ correspond à une matrice de parité qui comprend uniquement des valeurs binaires ('0' ou '1') et dont chaque colonne est différente des autres colonnes, et comprend au moins une valeur différente de 0.

Lors de la lecture des données présentes dans la mémoire, chaque mot de code qui est lu (i.e. chaque vecteur $v$ est vérifié en évaluant la valeur du produit matriciel $H \cdot v$.

Le résultat de cette opération est un vecteur binaire appelé « syndrome ». Si le syndrome est un vecteur nul, i.e. chacun des bits du vecteur est égal à zéro, le mot de code est considéré comme correct. A contrario, un syndrome non-nul indique la présence d'au moins une erreur dans le mot de code.

De plus, si un syndrome permet d'identifier les positions des bits erronés, le mot de code peut être corrigé.

En présence de taux d'erreurs élevés, une solution est d'utiliser des ECCs de plus en plus puissants, i.e. permettant de corriger de plus en plus de bits erronés dans un mot de code.

Cependant, cela entraîne un surcoût de plus en plus important en termes de surface, i.e. la surface de stockage pour les bits de vérification, et en termes de latence et de surface (consommation) du décodeur ECC.

Aussi, face à la problématique de la correction d'erreurs dans les mémoires résistives ou les mémoires flash, il réside le besoin d'une solution qui pallie les différents inconvénients des solutions connues, en particulier les inconvénients liés à la latence et la surface du décodeur ECC.

La présente invention répond à ce besoin.

Le document US2021/143836 décrit un procédé de correction d'erreur. Quand une erreur incorrigible est détectée, les bits faibles sont inversés en plusieurs étapes. Dans chaque étape, les bits à invertir sont déterminés par un seuil d'inversion.

**Résumé de l'invention**

L'invention a pour objet un dispositif permettant de réduire le coût des circuits utilisés pour la correction d'erreurs affectant les mots lus dans les mémoires protégées par un code correcteur d'erreurs (ECC).

L'invention adresse plus particulièrement les mémoires résistives et les mémoires flash protégées par un code correcteur d'erreurs qui permet la correction d'au moins deux bits erronés par mot de code stocké en mémoire.

Le dispositif de l'invention porte sur un décodeur ECC, qui avantageusement offre une implémentation de moindre surface et des performances de latence améliorées.

De manière générale, pour un ECC permettant de corriger jusqu'à r bits erronés par mot de code obtenu lors d'une opération de lecture mémoire, le dispositif selon l'invention combine un module de correction en capacité de corriger jusqu'à r-1 bits erronés par mot de code, et un module de détection permettant de vérifier le nombre de bits erronés par mot de code.

Plus spécifiquement, le module de détection est agencé pour détecter si le mot de code initial comprend au maximum $r-1$ bits erronés, et, en cas contraire, initier une séquence d'opérations de décodage sur une succession de mots dont chacun comporte un seul bit inversé par rapport au mot de code initial.

Une vérification est ensuite faite pour vérifier si le nombre de bits erronés dans la version du mot de code avec inversion d'un bit est devenu corrigeable, i.e. si le nombre de bits erronés est descendu en dessous de $r$. Dès que cette condition est satisfaite, le mot de code peut être corrigé.

Ainsi, le principe de l'invention repose sur l'implémentation et l'utilisation d'un décodeur ECC de moindre complexité fonctionnelle, de plus faible surface et de latence réduite, qu'un décodeur ECC composé d'un seul module combinatoire.

Pour parvenir au but recherché, il est proposé un dispositif de correction d'erreurs dans des mots de code, un mot de code comprenant un mot de données formé de bits de données et comprenant des bits de vérification, le dispositif exécutant les étapes du procédé de correction d'erreurs dans des mots de code selon la revendication 10. Le dispositif de l'invention comprend une combinaison de moyens ou modules dont (a) des moyens pour recevoir un mot de code avec des erreurs potentielles, le mot étant lu dans une mémoire protégée par un code correcteur d'erreurs ayant une capacité de correction maximale de $r$ bits erronés par mot de code.

Le dispositif de l'invention comprend de plus (b) un module de décodage qui comprend : - des moyens pour générer un vecteur binaire ou syndrome pour le mot de code reçu ou pour une version du mot de code avec inversion d'un bit, un mot de code avec inversion d'un bit étant un mot issu du mot de code reçu où la valeur d'un seul bit est inversée; et - des moyens de correction pour générer à partir du syndrome, un vecteur d'erreurs permettant de corriger jusqu'à $r-1$ bits erronés.

Le dispositif de l'invention comprend de plus (c) un module d'évaluation pour déterminer le nombre de bits erronés dans un mot de code, qui comprend : - des moyens de détection pour détecter, à partir du syndrome, si le nombre de bits erronés dans le mot de code reçu ou dans une version du mot de code avec inversion d'un bit, est supérieur ou égal à $r$ ; - des moyens d'analyse pour décider d'une opération d'inversion d'un bit ; et - des moyens d'inversion pour inverser un bit dans le mot de code.

Le dispositif de l'invention comprend de plus (d) des moyens de sortie pour délivrer un mot de données corrigé par le vecteur d'erreurs, quand le nombre de bits erronés dans le mot de code reçu ou dans une version du mot de code avec inversion d'un bit, est inférieur à $r$.

Selon un aspect de l'invention, les moyens pour générer un syndrome permettent d'évaluer la valeur d'un produit matriciel $H \cdot v$ où $H$ correspond à une matrice de parité, et où $v$ est un vecteur correspondant à un mot de code reçu ou à un mot de code avec inversion.

Dans une variante de réalisation, les moyens de correction comprennent une combinaison de portes logiques pour générer un vecteur d'erreurs, chaque bit du vecteur d'erreurs étant une entrée d'une porte ou-exclusive des moyens de sortie.

Dans une implémentation, les moyens de détection comprennent une combinaison de portes logiques pour générer un signal indiquant la présence d'au maximum r-1 bits erronés dans le mot de code reçu ou dans un mot de code avec inversion d'un bit, ledit signal étant une entrée des moyens d'analyse.

Selon un aspect de l'invention, les moyens d'analyse comprennent une machine d'état pilotée par la sortie des moyens de détection et la sortie des moyens d'inversion, ladite machine d'état permettant de déterminer si un nouveau cycle de décodage est à effectuer par le dispositif de correction d'erreurs, et de commander aux moyens d'inversion, l'inversion d'un seul bit dans le mot de code reçu.

Dans une variante de réalisation, le module d'évaluation comprend de plus des moyens de calcul de parité permettant de générer un signal de parité totale, ledit signal de parité totale permettant aux moyens d'analyse en combinaison avec le signal reçu des moyens de détection, de détecter la présence d'une erreur non-corrigeable.

Dans une implémentation, les moyens de correction sont conçus selon des méthodes d'optimisation logiques permettant de traiter des données de type « *don't care* ».

Dans une variante de réalisation, les moyens pour générer des syndromes sont conçus pour générer des syndromes surdimensionnés ayant un nombre de bits supérieur au nombre de bits de vérification du mot de code.

Un autre objet de l'invention couvre un système électronique de type FPGA ou ASIC comprenant une mémoire résistive ou une mémoire flash, un encodeur ECC et un dispositif de correction d'erreur selon l'invention.

L'invention adresse aussi un procédé de correction d'erreurs dans des mots de code, un mot de code comprenant un mot de données formé de bits de données et comprenant des bits de vérification.

Le procédé de l'invention comprenant des étapes consistant à :

- recevoir un mot de code avec des erreurs potentielles, le mot étant lu dans une mémoire protégée par un code correcteur d'erreurs ayant une capacité de correction maximale de r bits erronés par mot de code ;

- dans un premier cycle de décodage :

  - effectuer un décodage du mot de code reçu ;

  - déterminer si le mot de code contient un nombre de bits erronés inférieur ou égal à r-1 ; et si non

  - inverser un bit de données dans le mot de code pour générer une version du mot de code avec inversion d'un bit ;

- répéter un nouveau cycle de décodage avec les étapes précédentes pour chaque version du mot de code avec inversion d'un bit qui est générée, tant que le nombre de bits erronés est supérieur à r-1 ou qu'un nombre maximum de bits à inverser est atteint, l'étape d'inversion d'un bit consistant à chaque nouveau cycle à remettre à son état initial la valeur du bit inversé au cycle précédent, et à inverser la valeur d'un nouveau bit dans le mot de code reçu ; et

- délivrer un mot de données corrigé si le nombre de bits erronés dans le mot de code reçu ou dans une version du mot de code avec inversion d'un bit est inférieur à r.

Dans une réalisation, le procédé comprend avant l'étape de détermination si le mot de code contient un nombre de bits erronés inférieur à r, une étape de calcul de parité totale permettant de déterminer la présence d'erreur non-corrigeable dans le mot de code.

Avantageusement, le procédé de l'invention est mis en œuvre dans un système électronique de type FPGA ou ASIC comprenant une mémoire résistive ou une mémoire flash, un encodeur ECC et un dispositif de correction d'erreur selon l'invention.

**Description des figures**

Des caractéristiques, détails et avantages de l'invention ressortiront à la lecture de la description faite en référence aux dessins annexés donnés à titre d'exemple et qui représentent, respectivement :

La figure 1 illustre un exemple d'architecture d'un dispositif de correction d'erreurs selon l'invention ;

La figure 2 illustre les étapes d'un procédé de correction d'erreurs mis en œuvre par un dispositif selon la figure 1 ;

La figure 3 illustre une variante d'architecture d'un dispositif de correction d'erreurs selon l'invention avec détection d'erreurs non-corrigeables ;

La figure 4 illustre les étapes d'un procédé de correction d'erreurs mis en œuvre par un dispositif selon la figure 3 ;

La figure 5 montre un tableau comparant des gains en surface et en période d'horloge pour différents types d'ECC et circuits implémentant des dispositifs selon l'invention ;

La figure 6 montre un graphe du nombre moyen de cycles de décodage (cycles d'horloge) supplémentaires vs le taux d'erreurs par bit pour des décodeurs de l'art antérieur et les décodeurs selon l'invention.

**Description détaillée de l'invention**

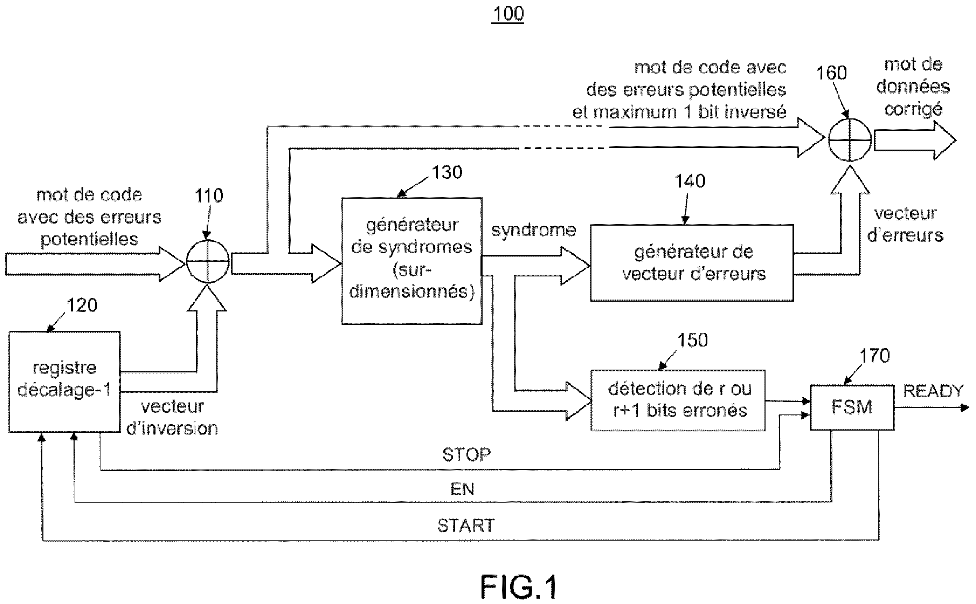

La figure 1 illustre un mode de réalisation d'un dispositif de correction d'erreurs 100 selon l'invention, aussi désigné comme décodeur ECC, et pouvant être utilisé avec un ECC permettant la correction d'un maximum de r bits erronés par mot de code lu dans une mémoire résistive ou une mémoire flash.

Ce dispositif peut être implémenté dans une architecture qui intègre généralement un système électronique hôte, un contrôleur mémoire et une mémoire (résistive ou flash).

L'hôte peut être constitué d'un ou plusieurs cœurs de processeur, d'un microcontrôleur, d'un circuit logique programmable (FPGA) (acronyme de l'anglais « Field Programmable Gate Array ») ou d'un circuit intégré spécialisé (ASIC) (acronyme de l'anglais « Application-Specific Integrated Circuit »).

Le contrôleur mémoire pilote les opérations d'écriture et de lecture dans la mémoire. Il comprend un encodeur et un décodeur ECC implémenté selon les variantes de réalisation décrites.

Dans des variantes de réalisation, le code correcteur d'erreurs peut être de type DEC (« Double Error Correction »), DEC-TED (« Double Error Correction-Triple Error Correction »), TEC (« Triple Error Correction »), TEC-QED (« Triple Error Correction-Quadruple Error Detection »), QEC (« Quadruple Error Correction ») ou QEC-QED (« Quadruple Error Correction-Quintuple Error Detection »).

La figure 1 montre les blocs fonctionnels du dispositif 100 de l'invention, et les flots de données circulant entre les différents blocs.

Le dispositif selon l'invention pour corriger des erreurs dans des mots de code, où un mot de code comprenant un mot de données formé de bits de données et comprenant des bits de vérification, comprend :

- des moyens 110 pour recevoir un mot de code avec des erreurs potentielles, le mot étant lu dans une mémoire résistive ou une mémoire flash, la mémoire étant protégée par un code correcteur d'erreurs ayant une capacité de correction maximale de r bits erronés par mot de code;
- un module de décodage qui comprend : - des moyens 130 pour générer un vecteur binaire ou syndrome pour le mot de code reçu ou pour un mot de code avec inversion d'un bit issu du mot de code reçu, un mot de code avec inversion d'un bit étant un mot obtenu du mot de code reçu où la valeur d'un seul bit est inversée; et - des moyens de correction 140 pour générer à partir du syndrome, un vecteur d'erreurs permettant de corriger jusqu'à $r\text{-}1$ bits erronés dans le mot de données ;
- un module d'évaluation pour déterminer le nombre de bits erronés dans le mot de code qui comprend : - des moyens de détection 150 pour détecter, à partir du syndrome, si le nombre de bits erronés dans le mot de code reçu ou dans un mot de code avec inversion d'un bit est supérieur ou égal à $r$ ; - des moyens d'analyse 170 pour décider d'une opération d'inversion d'un bit dans le mot de code ; - des moyens d'inversion 120 pour inverser un bit dans le mot de code ;
- des moyens de sortie 160 pour délivrer un mot de données corrigé quand le nombre de bits erronés dans le mot de code reçu ou dans un mot de code avec inversion d'un bit est inférieur à $r$.

Le décodeur ECC 100 reçoit en entrée un mot de code comprenant des erreurs potentielles de programmation, de stockage ou de lecture (i.e. des bits erronés). Chaque bit du mot de code reçu passe à travers une porte logique 110 de type ou-exclusive (XOR). Chaque porte XOR est contrôlée par un bit d'un vecteur d'inversion issu de moyens d'inversion 120.

Dans un mode de réalisation, les moyens d'inversion comprennent un registre à décalage 120 pour stocker un vecteur d'inversion ayant un nombre de bits égal au nombre de bits dans le mot de code moins r-1. Parmi ces bits, au maximum un seul bit peut être égal à 1 afin d'inverser la valeur de maximum un seul bit dans le mot en entrée du décodeur ECC.

Un mot de code en sortie des portes logiques d'entrée 110 est adressé à un module de décodage composé de moyens 130 pour générer un vecteur binaire ou syndrome pour le mot reçu.

Un mot reçu en entrée du générateur de syndrome 130 est un mot de code avec des erreurs potentielles qui a subi ou non une inversion d'un seul bit, selon la valeur du vecteur d'inversion.

A l'initialisation, tous les bits du vecteur d'inversion sont initialisés à la valeur zéro de telle sorte que chaque bit du mot de code reçu qui passe à travers une porte XOR 110 conserve sa valeur initiale.

A chaque itération de décodage, tous les bits du vecteur d'inversion sont décalés d'une position avec 0 ou 1 en entrée de la bascule située en entrée du registre à décalage, i.e à l'extrémité opposée au sens du décalage. La valeur 1 en entrée est utilisée juste pour la première opération de décalage pour produire un vecteur d'inversion avec une seule valeur de 1 et une version du mot de code dite « mot de code avec inversion d'un bit » qui est adressée au générateur de syndrome.

Le générateur de syndrome 130 implémente des opérations de multiplication pour réaliser le produit matriciel $H \cdot v$ de l'équation (1), où le vecteur $v$ est un mot de code avec des erreurs potentielles, soit reçu en entrée par la lecture de la mémoire, soit un mot de code avec inversion d'un bit généré au cours d'un cycle de décodage ultérieur.

A partir du syndrome, un générateur de vecteur d'erreur 140 génère un bit de contrôle pour chaque bit de données, l'ensemble de bits de contrôle étant le vecteur d'erreur.

Chaque bit de données peut être corrigé à l'aide d'une porte logique ou-exclusive (XOR) 160 à deux entrées, une entrée pour le bit à corriger et une autre entrée pilotée par le bit de contrôle qui lui correspond dans le vecteur d'erreur.

Ainsi la sortie du générateur de syndrome 130 est une entrée des moyens de correction 140 qui sont agencés pour générer un vecteur d'erreur permettant de corriger jusqu'à r-1 bits de données erronés dans le mot en sortie du module 110.

Dans un mode de réalisation avantageux, les moyens de correction 140 sont conçus avec des outils de conception qui permettent des optimisations de logique booléenne afin de traiter des entrées de type « *don't care* » (DC) aussi désigné par entrées « peu importe ».

De telles méthodes d'optimisation sont par exemple décrites dans l'article « Synthesis of Irregular Combinational Functions with Large Don't Care Sets » de V. Gherman et al. (DOI: 10.1145/1228784.1228856).

La notion de DC est définie en conjonction avec des fonctions booléennes incomplètement spécifiées, i.e., $f: \{0, 1\}^N \rightarrow \{0,1, X\}$ où $X$ représente une valeur non-définie qui peut prendre la valeur 0 ou 1, dans le cas d'une implémentation matérielle de f. Les combinaisons de N bits, $y \in \{0, 1\}^N$ dans le domaine de définition de f qui sont mappées à $X$, sont appelées DC.

Avantageusement, en présence d'un grand nombre de *DCs,* il devient possible d'obtenir des implémentations matérielles d'une fonction f qui soient plus optimisés en termes de latence, de surface ou de puissance dissipée.

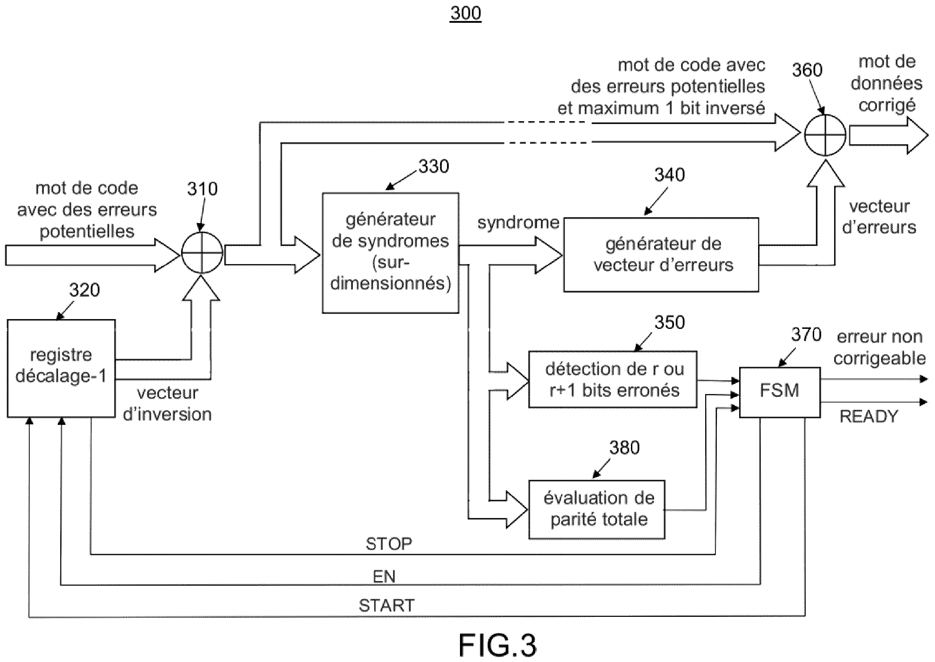

Ainsi, un grand nombre de *DCs* peut être identifié pour les fonctions implémentées par le module de correction 140 (et par similarité par le module de correction 340 de la variante de la figure 3).

De cette manière, tous les syndromes générés pour des erreurs qui affectent $r$ et $r+1$ bits, peuvent être considérés comme des données de type *DC* car dans ces cas, la sortie du décodeur ECC n'est pas utilisée. Ce type particulier de *DC* est considéré comme des *DCs* dits d'observation.

Dans une variante de réalisation, le nombre de *DCs* pour les moyens de correction 140 (et 340), peut encore être augmenté en générant des syndromes surdimensionnés par le générateur de syndrome 130 (et par similarité par le générateur de syndrome 330 de la figure 3), i.e., des syndromes ayant un nombre de bits supérieur au nombre de bits de vérification du mot de code.

De tels syndromes surdimensionnés peuvent être générés en rajoutant des lignes redondantes à la matrice de parité *H*, e.g. des lignes qui sont des combinaisons linaires de lignes déjà existantes. Pour chaque bit supplémentaire rajouté aux syndromes, le nombre de combinaisons possibles en entrée du module 130 (ou 330) est multiplié par 2.

Dans un tel processus, seul le nombre de *DCs* peut augmenter car la valeur de chaque bit de syndrome redondant est définie par les valeurs des bits de syndrome non-redondants. Par conséquent, pour chaque combinaison de bits de syndrome non-redondants, il y a une seule combinaison possible des bits de syndrome redondants, et toute autre combinaison de bits de syndromes redondants ne peut pas se réaliser. Toutes les combinaisons de bits de syndrome qui contiennent des valeurs de bits de syndrome redondants non-réalisables sont considérées comme des *DCs* dits de contrôlabilité.

Revenant à la figure 1, la sortie du générateur de syndrome est aussi une entrée des moyens de détection 150 du module d'évaluation.

Les moyens de détection sont agencés pour permettre par l'évaluation du syndrome, la détection de r ou r+1 bits erronés dans le mot de code en sortie du module 110.

La sortie du module 150 est utilisée par une machine d'état 170 ou (FSM) acronyme « Finite State Machine » en anglais.

La machine d'état permet de déterminer si un nouveau cycle de décodage doit être effectué par le décodeur ECC.

La FSM pilote le registre à décalage 120 à travers des signaux *START* et *EN.* Pendant le premier cycle de décodage, si au moins r bits erronés sont détectés dans le mot de code reçu en entrée du dispositif 100 (et en sortie du module 110, le vecteur d'inversion étant à son état initial, toutes les valeurs à 0), les deux signaux *START* et *EN* prennent la valeur 1 et la FSM force le démarrage d'un nouveau cycle de décodage. Le premier bit du registre 120 est mis à la valeur 1. De cette manière, le bit du mot de code reçu qui entre dans la première porte XOR est inversé. En même temps, un nouveau cycle de décodage est effectué avec la version du mot de code dont le premier bit est inversé.

A chaque cycle de décodage suivant, le signal *START* est remis à 0 et le signal *EN* est maintenu à 1, et ce tant qu'un nombre *r* ou *r+1* de bits erronés est détecté, i.e. jusqu'au cycle où le décodage devient fructueux. Le signal *EN* permet de remettre tous les bits du registre 120 à zéro.

Ainsi, après chaque cycle de décodage infructueux, i.e. où le module de détection 150 indique la présence d'au moins r bits erronés dans la version du mot en sortie du module 110, la valeur 1 est avancée d'une position dans le registre 120 de manière qu'un autre bit du mot en entrée du dispositif 100 soit inversé.

Le processus itératif d'opérations de décodage s'arrête soit quand le module de détection 150 indique un nombre d'au maximum *r-1* bits erronés (i.e. un nombre d'erreurs qui peuvent être corrigées par le vecteur d'erreur), soit quand la valeur 1 est attribuée au bit en dernière position dans le registre à décalage 120.

Chaque cycle de décodage peut être exécuté dans un cycle d'horloge qui contrôle le dispositif 100.

Après le cycle de décodage positif, une correction des bits de données erronés dans la version du mot en sortie du module d'entrée 110 est effectuée à l'aide des portes ou-exclusive 160, les portes étant pilotées par les bits du vecteur d'erreurs généré par le module 140.

Vis-à-vis de l'extérieur du dispositif, l'arrêt du processus de décodage est indiqué un signal *Ready* généré en sortie de la FSM.

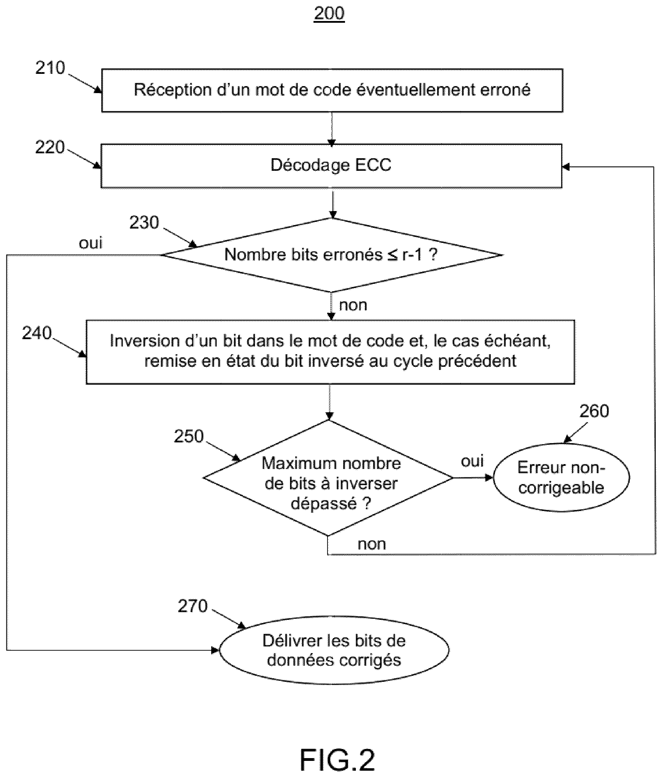

La figure 2 illustre les étapes d'un procédé de correction d'erreurs selon l'invention pouvant être mis en œuvre par un dispositif selon la figure 1.

Le procédé 200 s'applique lors d'une lecture dans une mémoire protégée par un ECC capable de corriger jusqu'à *r* bits par mot de code, et il permet d'améliorer la correction d'erreurs.

Le procédé débute par une étape 210, de réception d'un mot de code qui potentiellement peut contenir des bits erronés.

Dans une étape suivante 220, le procédé permet un premier décodage du mot de code 220, et permet de vérifier dans une étape suivante ou simultanée 230 si le nombre de bits erronés est inférieur ou égal à r-1.

Si le nombre de bits erronés est au maximum de r-1, le procédé permet la correction des bits erronés et permet de délivrer à l'étape 270 un mot corrigé.

Selon des variantes de réalisation, le procédé permet de délivrer soit le mot de code corrigé en entier, soit uniquement les bits de données corrigés (pour des implémentations réduites de décodeur ECC).

Revenant à l'étape 230, si le nombre de bits erronés est supérieur à r-1, le procédé permet d'initier une exécution d'un nouveau cycle de décodage pour une version du mot de code où un seul bit est inversé. Le procédé comprend une étape 240 dans laquelle un bit du mot de code initialement reçu est inversé.

Lors l'exécution d'un nouveau cycle de décodage, hormis la première exécution, le procédé permet de remettre à sa valeur initiale le bit qui a été inversé lors de l'exécution précédente.

Ainsi, à chaque exécution de l'étape 240 un nouveau bit du mot de code est inversé.

Le procédé poursuit l'exécution de nouveaux cycles de décodage (branche *non* de 250) tant que le nombre de bits erronés n'est pas inférieur ou égal à *r-1,* ou tant qu'un nombre maximal de bits à inverser dans le mot initialement reçu n'est pas atteint.

Quand le nombre maximal est atteint, le procédé génère à l'étape 260 un signal signalant une erreur non-corrigeable.

Le procédé de correction d'erreur selon l'invention permet, pour un circuit ECC capable de corriger *r* bits erronés par mot de code, qu'il puisse être traité jusqu'à r-1 bits erronés en un cycle de décodage.

Ainsi avantageusement le procédé de l'invention mis en œuvre sur un dispositif optimisé tel que celui de la figure 1 ou avec des variantes de réalisation, permet de réduire la latence et la surface de la logique de correction d'erreur.

La figure 3 illustre une variante d'architecture d'un dispositif de correction d'erreurs selon l'invention, qui comprend des moyens supplémentaires pour faire un calcul de parité totale.

Le dispositif 300 peut être utilisé avec un ECC qui permet la correction d'au maximum *r* bits erronés et la détection de *r+1* bits erronés par mot de code.

Dans cette variante, il est pris pour hypothèse que la détection de *r+1* bits erronés est assurée en utilisant des mots de code ayant un bit de parité totale ajouté, ce qui permet que les mots de code qui en résultent sont tous des mots pairs ou des mots impairs.

Différents blocs fonctionnels sont identiques aux blocs de la figure 1, et il n'en est pas fait une description détaillée, qui peut être reprise de la description précédente. Ainsi, les blocs ou modules 310 à 360 de la figure 3 sont respectivement identiques aux modules 110 à 160 de la figure 1.

Le dispositif 300 comprend de plus un module 380 d'évaluation de parité totale.

Le module 380 est conçu pour sélectionner un bit de syndrome qui correspond à la parité totale du mot en sortie du module 310, dans le syndrome calculé par le générateur de syndrome 330, et envoyer un signal de parité totale vers la machine d'état 370.

Dans une variante de réalisation, le bit de syndrome correspondant à la parité totale, peut être calculé à partir de tous les bits en entrée du générateur de syndrome 330 à l'aide d'un arbre de portes XOR ayant en entrée tous ces bits.

Dans la variante de la figure 3, la machine d'état 370 est très similaire à celle de l'architecture en figure 1, à la différence que lors du premier cycle de décodage, la FSM 370 utilise le signal de parité totale généré en sortie du module 380 pour identifier la présence d'une erreur non-corrigeable qui affecte r+1 bits.

Cette variante permet de tirer profit du fait qu'un mot de code avec *r* bits erronés a une parité totale différente d'un mot de code avec *r+1* bits erronés, alors que la sortie du module 350 reste la même dans les deux cas.

Ainsi, dans le cas où une erreur non-corrigeable est indiquée pendant le premier cycle de décodage, aucun cycle de décodage supplémentaire n'est initié et un signal est généré en sortie de la FSM 370 indiquant la présence d'une erreur non-corrigeable.

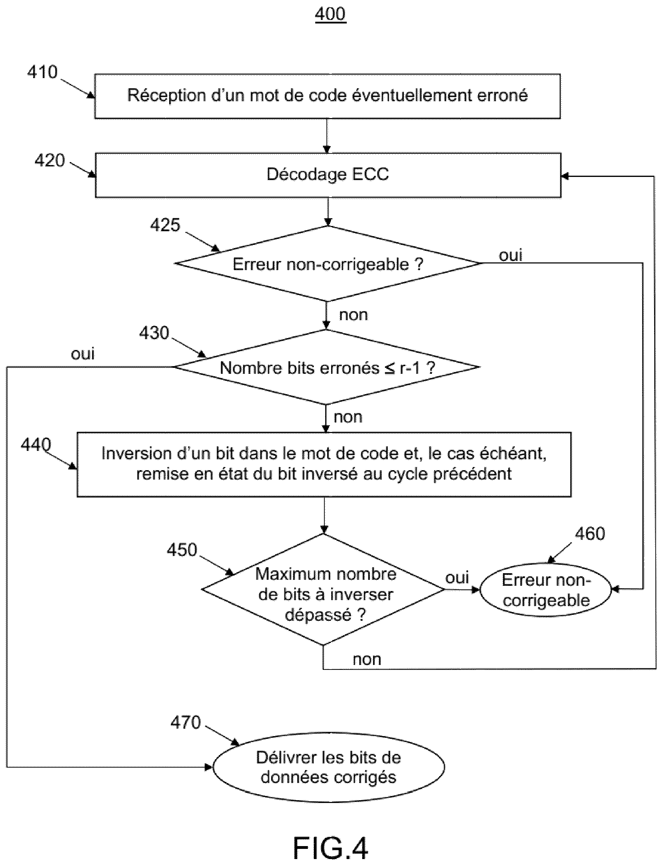

La figure 4 illustre les étapes d'un procédé de correction d'erreurs pouvant être mis en œuvre par un dispositif selon la figure 3.

Le procédé 400 s'applique lors d'une lecture dans une mémoire protégée par un ECC capable de corriger jusqu'à *r* bits par mot de code et de détecter *r+1* bits erronés par mot de code.

Différentes étapes sont identiques aux étapes de la figure 2, et il n'en est pas fait une description détaillée, qui peut être reprise de la description précédente. Ainsi, les étapes 410, 430, 440, 450, 460 et 470 sont respectivement identiques aux étapes 210, 230, 240, 250, 260 et 270 du procédé 200.

Après la réception à l'étape 410 d'un mot de code contenant potentiellement des bits erronés, l'étape suivante de décodage 420 permet d'identifier la présence d'erreurs non-corrigeables dans le mot de code, comme les erreurs qui affectent *r+1* bits.

Le résultat de cette détection d'erreurs non-corrigeables est traité à l'étape 425. Dans le cas où il est détecté un nombre de *r+1* bits erronés, le procédé poursuit par une étape 460 afin de signaler la présence d'erreurs non-corrigeables dans le mot de code.

Dans le cas où il n'est pas détecté d'erreurs non-corrigeables le procédé poursuit par l'étape 430.

Puis selon le résultat de l'étape 430, le procédé poursuit par la mise en place d'une boucle de cycles de décodage sur des versions de mot de code avec inversion d'un seul bit, selon les étapes (440, 450) et conformément aux étapes correspondantes (240, 250) décrites pour le procédé 200.

Selon différents modes de réalisation des procédés 200 et 400, l'étape (240, 440) d'inversion d'un seul bit dans le mot de code à chaque cycle de décodage, peut consister soit à appliquer une inversion unitaire uniquement sur les bits de données du mot de code initialement reçu à l'étape 210 ou 410, soit à appliquer une inversion unitaire sur tous les bits (bits de données et bits de vérification) moins r-1 bits du mot de code reçu à l'étape 210 ou 410.

Dans un mode de réalisation d'un ECC de type BCH (acronyme des initiales des auteurs Bose, Ray-Chaudhuri et Hocquenghem), les modules de détection 150 et 350 respectivement des figures 1 et 3, peuvent être implémentés selon une méthode présentée dans le papier intitulé « Encoding and Error-Correction Procedures for the Bose-Chaudhuri Codes» par W.W. Peterson (DOI: 10.1109/TIT.1960.1057586). Ce papier introduit des matrices appelées matrices de Peterson pour des ECCs de type BCH. Si l'ECC peut corriger jusqu'à r bits erronés par mot de code, la matrice de Peterson $M_{r+1}$ est singulière, i.e., son déterminant est égal à 0, si le nombre de bits erronés présents dans un mot de code est inférieur ou égal à r-1. La matrice de Peterson $M_{r+1}$ n'est singulière si le nombre de bits erronés présents dans un mot de code est égal à r ou r+1.

Le procédé de la figure 4 peut être alors adapté pour détecter une erreur qui affecte r bits en évaluant le déterminant de la matrice $M_r$ de Peterson et la parité totale du mot reçu (égale à r modulo 2 si tous les mots de code sont pairs), et détecter une erreur qui affecte r+1 bits en évaluant le déterminant de la matrice de Peterson $M_{r+1}$ et la parité totale du mot reçu (égale à r+1 modulo 2 si tous les mots de code sont pairs).

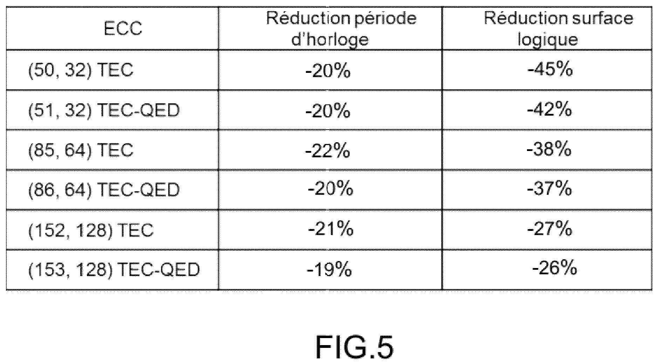

La figure 5 illustre les gains en surface et en cycles d'horloge de différents types d'ECC et circuits implémentant des dispositifs de correction d'erreur selon des architectures telles que proposées en figure 1 ou en figure 3.

Les ECCs de l'état de l'art considérés sont de type BCH et permettent la correction d'un maximum de 3 bits erronés par mot de code (*r*=3) sur des mots de code avec 32, 64 ou 128 bits de données. Les codes considérés sont identifiés comme étant TEC (acronyme de l'anglais « triple-error correction ») ou TEC-QED (acronyme de l'anglais « triple-error correction and quadruple-error detection »), selon que la détection de 4 bits erronés est assurée ou non.

Le calcul des gains, réduction sur la période d'horloge et réduction de la surface logique, est fait par rapport à des décodeurs implémentés selon des solutions présentées dans le papier intitulé « A Low-Complexity Three-Error-Correcting BCH Decoder with Applications in Concatenated Codes » par J. Freudenberger, M. Rajab et S. Shavgulidze (DOI: 10.30420/454862002). Tous les décodeurs ont été synthétisés avec l'outil Synopsis Design Compiler dans une technologie FDSOI en 28nm.

L'approche de correction des erreurs par cycles de décodage itératifs permet par exemple de réduire la période d'horloge jusqu'à -20% pour des codes TEC de 32 bits, parallèlement à des réductions de la zone logique jusqu'à -45%.

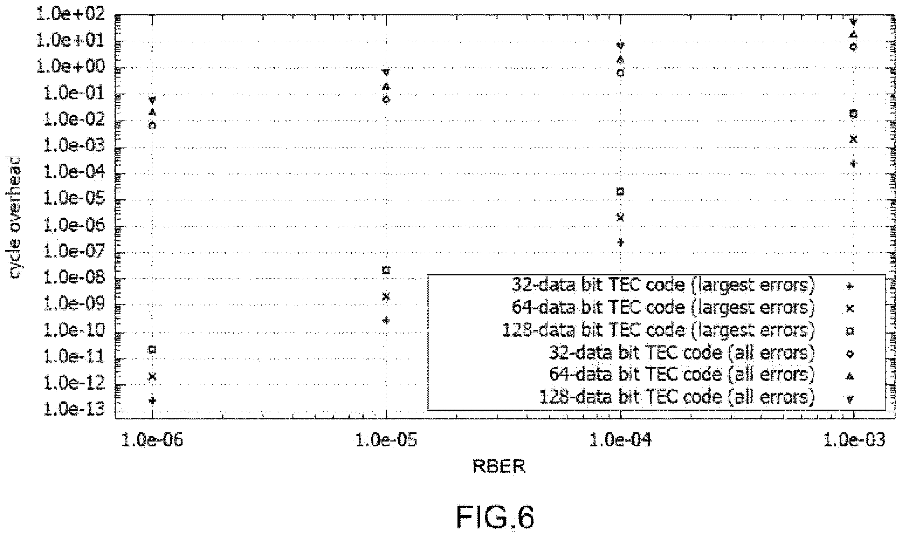

La figure 6 illustre sur un graphe le nombre moyen de cycles de décodage supplémentaires « cycle overhead » selon le taux d'erreurs par bit « RBER », pour des décodeurs de l'art antérieur et des décodeurs selon l'invention.

Selon l'invention, des cycles de décodage supplémentaires sont introduits seulement si le mot de code reçu contient un nombre maximum de bits erronés corrigeables. Le décodage selon l'art antérieur (étiquette « all errors ») nécessite des cycles de décodage supplémentaires dès que le mot reçu contient un bit erroné. Le nombre de cycles supplémentaires est au moins égal (a) au nombre de bits de données plus (b) le nombre maximum de bits erronés corrigeables moins (c) le nombre réel de bits erronés. On peut remarquer que la solution proposée (étiquette « largest errors ») présente un avantage sensible et son surcoût de cycle de décodage (horloge) devient négligeable avec la réduction du RBER.

Pour des RBERs en dessous de $10^{-4}$, ce surcoût descend en dessous de $2\text{x}10^{-7}$, $2\text{x}10^{-7}$ et $2\text{x}10^{-5}$ respectivement pour des codes TEC avec 32, 64 et 128 bits de données. Les entrées sous l'étiquette « all errors » correspondent au surcoût de l'une méthode connue présentée dans le papier intitulé « Step-by-step decoding of the Bose-Chaudhuri-Hocquenghem codes » par J. Massey (DOI: 10.1109/TIT. 1965.1053833).

Dans cette approche de l'art antérieur, bien qu'il y ait une inversion de bit, ce procédé est strictement diffèrent du procédé de l'invention pour ce qui concerne (a) la correction des mots de code affectés par moins de r erreurs et (b) la correction des erreurs restantes une fois qu'un premier bit erroné est corrigé en cas de r bits erronés.

Dans cette approche dite « step-by-step », il y a initialement injection de bits erronés supplémentaires dans les bits de vérification afin d'atteindre un nombre maximal de r bits erronés. Le procédé permet ensuite d'inverser 1 bit à la fois et de vérifier après décodage si le nombre de bits erronés a diminué. Si le nombre de bits erronés a diminué, le procédé permet d'identifier que ce bit inversé est erroné. Puis le procédé se poursuit pour inverser et tester un par un tous les bits de données. Il y a alors un nombre très important de cycles à effectuer dès qu'une erreur est rencontrée.

A contrario, selon les procédés et les dispositifs de l'invention, s'il n'est pas détecté un nombre maximal de bits erronés, la correction se passe en un seul cycle (branches oui des étapes 230 et 430). Ceci présente un avantage majeur vérifié et illustré sur la figure 6.

La présente description illustre une implémentation préférentielle de l'invention, mais qui n'est pas limitative. Des exemples sont choisis pour permettre une bonne compréhension des principes de l'invention et une application concrète, mais ne sont en rien exhaustifs et doivent permettre à l'homme du métier d'apporter des modifications et des variantes d'implémentation aux différents circuits en conservant les mêmes principes. Dans des variantes de réalisation, chaque module fonctionnel d'encodage, de comptage, de comparaison et d'inversion peut être implémenté par un module dédié tel qu'un ASIC.

L'invention peut s'implémenter à partir d'éléments matériels et/ou logiciels. Elle peut être disponible en tant que produit programme d'ordinateur exécuté par un processeur dédié ou par un contrôleur mémoire d'un système de stockage, et qui comprend des instructions de code pour exécuter les étapes des procédés dans leurs différents modes de réalisation.

## Revendications

**1.** Dispositif de correction d'erreurs dans des mots de code, un mot de code comprenant un mot de données formé de bits de données et comprenant des bits de vérification, le dispositif exécutant les étapes du procédé de correction d'erreurs dans des mots de code selon la revendication 10, et comprenant :

- des moyens (110) pour recevoir un mot de code avec des erreurs potentielles, le mot étant lu dans une mémoire protégée par un code correcteur d'erreurs ayant une capacité de correction maximale de r bits erronés par mot de code;
- un module de décodage, comprenant :

- des moyens (130) pour générer un vecteur binaire ou syndrome pour le mot de code reçu ou pour une version du mot de code avec inversion d'un bit, un mot de code avec inversion d'un bit étant un mot issu du mot de code reçu où la valeur d'un seul bit est inversée;
- des moyens de correction (140) pour générer à partir du syndrome, un vecteur d'erreurs permettant de corriger jusqu'à *r-1* bits erronés ;

- un module d'évaluation pour déterminer le nombre de bits erronés dans un mot de code, comprenant :

- des moyens de détection (150) pour détecter, à partir du syndrome, si le nombre de bits erronés dans le mot de code reçu ou dans une version du mot de code avec inversion d'un bit, est supérieur ou égal à *r* ;
- des moyens d'analyse (170) pour décider d'une opération d'inversion d'un bit ;
- des moyens d'inversion (120) pour inverser un bit dans le mot de code ;

- des moyens de sortie (160) pour délivrer un mot de données corrigé par le vecteur d'erreurs, quand le nombre de bits erronés dans le mot de code reçu ou dans une version du mot de code avec inversion d'un bit, est inférieur à *r*.

2.  Le dispositif selon la revendication 1 dans lequel les moyens pour générer un syndrome permettent d'évaluer la valeur d'un produit matriciel $H \cdot v$ où $H$ correspond à une matrice de parité, et où $v$ est un vecteur correspondant à un mot de code reçu ou à un mot de code avec inversion.

3.  Le dispositif selon la revendication 1 ou 2 dans lequel les moyens de correction (140) comprennent une combinaison de portes logiques pour générer un vecteur d'erreurs, chaque bit du vecteur d'erreurs étant une entrée d'une porte ou-exclusive des moyens de sortie (160).

4.  Le dispositif selon l'une quelconque des revendications 1 à 3 dans lequel les moyens de détection (150, 350) comprennent une combinaison de portes logiques pour générer un signal indiquant la présence d'au maximum r-1 bits erronés dans le mot de code reçu ou dans un mot de code avec inversion d'un bit, ledit signal étant une entrée des moyens d'analyse.

5.  Le dispositif selon l'une quelconque des revendications 1 à 4 dans lequel les moyens d'analyse comprennent une machine d'état (170) pilotée par la sortie des moyens de détection et la sortie des moyens d'inversion, ladite machine d'état permettant de déterminer si un nouveau cycle de décodage est à effectuer par le dispositif de correction d'erreurs, et de commander aux moyens d'inversion, l'inversion d'un seul bit dans le mot de code reçu.

6.  Le dispositif selon l'une quelconque des revendications 1 à 5 dans lequel le module d'évaluation comprend de plus des moyens de calcul de parité (380) permettant de générer un signal de parité totale, ledit signal de parité totale permettant aux moyens d'analyse (370) en combinaison avec le signal reçu des moyens de détection (350), de détecter la présence d'une erreur non-corrigeable.

7.  Le dispositif selon l'une quelconque des revendications 1 à 6 dans lequel les moyens de correction (140, 340) sont conçus selon des méthodes d'optimisation logiques permettant de traiter des données de type « *don't care* ».

8.  Le dispositif selon l'une quelconque des revendications 1 à 7 dans lequel les moyens pour générer des syndromes sont conçus pour générer des syndromes surdimensionnés ayant un nombre de bits supérieur au nombre de bits de vérification du mot de code.

9.  Un système électronique de type FPGA ou ASIC comprenant une mémoire résistive ou une mémoire flash, un encodeur ECC et un dispositif de correction d'erreur selon l'une quelconque des revendications 1 à 8.

10. Procédé de correction d'erreurs dans des mots de code, un mot de code comprenant un mot de données formé de bits de données et comprenant des bits de vérification, le procédé comprenant des étapes de :

    - (210) recevoir un mot de code avec des erreurs potentielles, le mot étant lu dans une mémoire protégée par un code correcteur d'erreurs ayant une capacité de correction maximale de r bits erronés par mot de code;
    - dans un premier cycle de décodage :

      - (220) effectuer un décodage du mot de code reçu ;
      - (230) déterminer si le mot de code contient un nombre de bits erronés inférieur ou égal à $r-1$ ;
      - (240) si non, inverser un bit de données dans le mot de code pour générer une version du mot de code avec inversion d'un bit ;

      - répéter un nouveau cycle de décodage avec les étapes précédentes (220) à (240) pour chaque version du mot de code avec inversion d'un bit qui est générée, tant que le nombre de bits erronés est supérieur à $r-1$ ou qu'un nombre maximum de bits à inverser est atteint, l'étape d'inversion d'un bit consistant à chaque nouveau cycle à remettre à son état initial la valeur du bit inversé au cycle précédent, et à inverser la valeur d'un nouveau bit dans le mot de code reçu ; et
      - délivrer un mot de données corrigé si le nombre de bits erronés dans le mot de code reçu ou dans une version du mot de code avec inversion d'un bit est inférieur à $r$.

11. Le procédé selon la revendication 10 comprenant avant l'étape (430) de déterminer si le mot de code contient un nombre de bits erronés inférieur à r, une étape (425) de calcul de parité totale permettant de déterminer la présence d'erreur non-corrigeable dans le mot de code.

12. Le procédé selon la revendication 10 ou 11 mis en œuvre dans un système électronique de type FPGA ou ASIC comprenant une mémoire résistive ou une mémoire flash, un encodeur ECC et un dispositif de correction d'erreur selon l'une quelconque des revendications 1 à 8.

**Patentansprüche**

1. Vorrichtung zur Fehlerkorrektur in Codewörtern, wobei ein Codewort ein Datenwort umfasst, das aus Datenbits gebildet ist und Prüfbits umfasst, wobei die Vorrichtung die Schritte des Verfahrens zur Fehlerkorrektur in Codewörtern nach Anspruch 10 ausführt und umfasst:

   - Mittel (110) zum Empfangen eines Codeworts mit potenziellen Fehlern, wobei das Wort aus einem Speicher gelesen wird, der durch einen Fehlerkorrekturcode geschützt ist, welcher eine maximale Korrekturkapazität von $r$ fehlerhaften Bits pro Codewort aufweist;
   - ein Decodiermodul, umfassend:

      - Mittel (130) zum Erzeugen eines Binärvektors oder Syndroms für das empfangene Codewort oder für eine Version des Codeworts mit Invertierung eines Bits, wobei ein Codewort mit Invertierung eines Bits ein Wort ist, das aus dem empfangenen Codewort stammt, wobei der Wert eines einzelnen Bits invertiert ist;
      - Korrekturmittel (140) zum Erzeugen, auf Grundlage des Syndroms, eines Fehlervektors, der es ermöglicht, bis zu $r$ - 1 fehlerhafte Bits zu korrigieren;

   - ein Auswertungsmodul zum Bestimmen der Anzahl fehlerhafter Bits in einem Codewort, umfassend:

      - Detektionsmittel (150) zum Erkennen, auf Grundlage des Syndroms, ob die Anzahl fehlerhafter Bits in dem empfangenen Codewort oder in einer Version des Codeworts mit Invertierung eines Bits größer oder gleich $r$ ist;
      - Analysemittel (170) zum Entscheiden über eine Operation zur Invertierung eines Bits;
      - Invertierungsmittel (120) zum Invertieren eines Bits in dem Codewort;

   - Ausgabemittel (160) zum Herausgeben eines durch den Fehlervektor korrigierten Datenworts, wenn die Anzahl fehlerhafter Bits in dem empfangenen Codewort oder in einer Version des Codeworts mit Invertierung eines Bits kleiner ist als r.

2. Vorrichtung nach Anspruch 1, wobei die Mittel zum Erzeugen eines Syndroms es ermöglichen, den Wert eines Matrixprodukts $H \cdot v$ zu bewerten, wobei $H$ einer Paritätsmatrix entspricht, und wobei $v$ ein Vektor ist, der einem empfangenen Codewort oder einem Codewort mit Invertierung entspricht.

3. Vorrichtung nach Anspruch 1 oder 2, wobei die Korrekturmittel (140) eine Kombination von Logikgattern zum Erzeugen eines Fehlervektors umfassen, wobei jedes Bit des Fehlervektors ein Eingang eines Exklusiv-Oder-Gatters der Ausgangsmittel (160) ist.

4. Vorrichtung nach einem der Ansprüche 1 bis 3, wobei die Detektionsmittel (150, 350) eine Kombination von Logikgattern zum Erzeugen eines Signals umfassen, das das Vorhandensein von maximal r-1 fehlerhaften Bits in dem empfangenen Codewort oder in einem Codewort mit Invertierung eines Bits anzeigt, wobei das Signal ein Eingang der Analysemittel ist.

5. Vorrichtung nach einem der Ansprüche 1 bis 4, wobei die Analysemittel eine Zustandsmaschine (170) umfassen, die durch den Ausgang der Detektionsmittel und den Ausgang der Invertierungsmittel gesteuert wird, wobei die Zustandsmaschine es ermöglicht, zu bestimmen, ob ein neuer Decodierzyklus durch die Fehlerkorrekturvorrichtung durchgeführt werden soll, und den Invertierungsmitteln die Invertierung eines einzelnen Bits in dem empfangenen Codewort zu befehlen.

6. Vorrichtung nach einem der Ansprüche 1 bis 5, wobei das Auswertungsmodul zusätzlich Paritätsberechnungsmittel (380) umfasst, die es ermöglichen, ein Gesamtparitätssignal zu erzeugen, wobei das Gesamtparitätssignal es den Analysemitteln (370) in Kombination mit dem von den Detektionsmitteln (350) empfangenen Signal ermöglicht, das Vorhandensein eines nicht korrigierbaren Fehlers zu erkennen.

7. Vorrichtung nach einem der Ansprüche 1 bis 6, wobei die Korrekturmittel (140, 340) nach logischen Optimierungsmethoden konzipiert sind, die es ermöglichen, Daten vom Typ *"don't care"* zu verarbeiten.

8. Vorrichtung nach einem der Ansprüche 1 bis 7, wobei die Mittel zum Erzeugen von Syndromen so konzipiert sind, dass sie überdimensionierte Syndrome erzeugen, die eine Bitanzahl aufweisen, die größer ist als die Anzahl an Prüfbits des Codeworts.

9. Elektronisches System vom Typ FPGA oder ASIC, das einen resistiven Speicher oder einen Flash-Speicher, einen ECC-Encoder und eine Vorrichtung zur Fehlerkorrektur nach einem der Ansprüche 1 bis 8 umfasst.

10. Verfahren zur Fehlerkorrektur in Codewörtern, wobei ein Codewort ein Datenwort umfasst, das aus Datenbits gebildet ist und Prüfbits umfasst, wobei das Verfahren die folgenden Schritte umfasst:

- (210) Empfangen eines Codeworts mit potenziellen Fehlern, wobei das Wort aus einem Speicher gelesen wird, der durch einen Fehlerkorrekturcode geschützt ist, welcher eine maximale Korrekturkapazität von r fehlerhaften Bits pro Codewort aufweist;
- in einem ersten Decodierzyklus:

- (220) Durchführen einer Decodierung des empfangenen Codeworts;
- (230) Bestimmen, ob das Codewort eine Anzahl fehlerhafter Bits enthält, die kleiner oder gleich r-1 ist;
- (240) wenn nein, Invertieren eines Datenbits in dem Codewort, um eine Version des Codeworts mit Invertierung eines Bits zu erzeugen;

- Wiederholen eines neuen Decodierzyklus mit den vorstehenden Schritten (220) bis (240) für jede Version des Codeworts mit Invertierung eines Bits, die erzeugt wird, solange die Anzahl fehlerhafter Bits größer ist als r - 1 oder bis eine maximale Anzahl zu invertierender Bits erreicht ist, wobei der Schritt des Invertierens eines Bits darin besteht, in jedem neuen Zyklus den Wert des in dem vorhergehenden Zyklus invertierten Bits auf seinen ursprünglichen Zustand zurückzusetzen und den Wert eines neuen Bits in dem empfangenen Codewort zu invertieren; und
- Herausgeben eines korrigierten Datenworts, wenn die Anzahl fehlerhafter Bits in dem empfangenen Codewort oder in einer Version des Codeworts mit Invertierung eines Bits kleiner ist als r.

11. Verfahren nach Anspruch 10, das vor dem Schritt (430) des Bestimmens, ob das Codewort eine Anzahl fehlerhafter Bits enthält, die kleiner ist als r, einen Schritt (425) des Berechnens der Gesamtparität umfasst, der es ermöglicht, das Vorhandensein eines nicht korrigierbaren Fehlers in dem Codewort zu bestimmen.

12. Verfahren nach Anspruch 10 oder 11, das in einem elektronischen System vom Typ FPGA oder ASIC implementiert wird, welches einen resistiven Speicher oder einen Flash-Speicher, einen ECC-Encoder und eine Vorrichtung zur Fehlerkorrektur nach einem der Ansprüche 1 bis 8 umfasst.

**Claims**

1. Error correction device for in code words, a code word comprising a data word formed by data bits and comprising verification bits, the device carrying out the steps of the error correction method in code words according to claim 10, and comprising:

- means (110) for receiving a code word with potential errors, the word being read in a protected memory by an error correction code which has a maximum correction capacity of r erroneous bits per code word;
- a decoding module comprising:

- means (130) for generating a binary vector or syndrome for the code word received or for a version of the code word with inversion of a bit, a code word with inversion of a bit being a word originating from the code word received wherein the value of a single bit is inverted;
- correction means (140) for generating from the syndrome an error vector which enables up to r - 1 erroneous bits to be corrected;

- an evaluation module for determining the number of erroneous bits in a code word, comprising:

- detection means (150) for detecting, based on the syndrome, if the number of erroneous bits in the code word received or a version of the code word with inversion of a bit is greater than or equal to r;
- analysis means (170) in order to decide on a bit inversion operation;
- inversion means (120) for inverting a bit in the code word;

- output means (160) for issuing a data word corrected by the error vector when the number of erroneous bits in the code word received or in a version of the code word with bit inversion is less than r.

2. Device according to claim 1, wherein the means for generating a syndrome enable the value of a matrix product $H \cdot v$ to be evaluated, wherein $H$ corresponds to a parity matrix, and where $v$ is a vector corresponding to a code word received or to a code word with inversion.

3. Device according to claim 1 or 2, wherein the correction means (140) comprise a combination of logic gates in order to generate an error vector, each bit of the error vector being an input of an exclusive-or gate of the output means (160).

4. Device according to any one of claims 1 to 3, wherein the detection means (150, 350) comprise a combination of logic gates in order to generate a signal which indicates the presence of a maximum of r-1 erroneous bits in the code word received or in a code word with inversion of a bit, the signal being an input of the analysis means.

5. Device according to any one of claims 1 to 4, wherein the analysis means comprise a status machine (170) which is controlled by the output of the detection means and the output of the inversion means, the status machine enabling it to be determined whether a new decoding cycle should be carried out by the error correction device, and enabling the inversion means to be controlled to carry out the inversion of a single bit in the code word received.

6. The device according to any one of claims 1 to 5, wherein the evaluation module further comprises parity calculation means (380) which enable a total parity signal to be generated, the total parity signal enabling the analysis means (370) in combination with the signal received from the detection means (350) to detect the presence of a non-correctable error.

7. Device according to any one of claims 1 to 6, wherein the correction means (140, 340) are configured in accordance with logical optimization methods which enable data of the type « *don't care* » to be processed.

8. The device according to any one of claims 1 to 7, wherein the means for generating syndromes are configured to generate oversized syndromes which have a number of bits greater than the number of verification bits of the code word.

9. An electronic system of the FPGA or ASIC type comprising a resistive memory or a flash memory, an ECC encoder and an error correction device according to any one of claims 1 to 8.

10. Error correction method in code words, a code word comprising a data word formed by data bits and comprising verification bits, the method comprising steps of:

- (210) receiving a code word with potential errors, the word being read in a protected memory by an error correction code which has a maximum correction capacity of r erroneous bits per code word;
- in a first decoding cycle:

  - (220) carrying out a decoding of the code word received;
  - (230) determining whether the code word contains a number of erroneous bits less than or equal to r-1;
  - (240) if not, inverting a data bit in the code word in order to generate a version of the code word with inversion of a bit;

- repeating a new decoding cycle with the preceding steps (220) to (240) for each version of the code word with inversion of a bit which is generated as long as the number of erroneous bits is greater than $r$ - 1 or a maximum number of bits to be inverted is reached, the inversion step of a bit involving with each new cycle setting the value of the bit inverted during the preceding cycle back to its initial state and inverting the value of a new bit in the code word received; and
- transmitting a corrected data word if the number of erroneous bits in the code word received or in a version of the code word with bit inversion is less than r.

11. Method according to claim 10, comprising prior to step (430) determining whether the code word contains a number of erroneous bits less than r, a step (425) of total parity calculation which enables the presence of a non-correctable error in the code word to be determined.

12. Method according to claim 10 or 11, implemented in an electronic system of the FPGA or ASIC type, comprising a resistive memory or a flash memory, an ECC encoder and an error correction device according to any one of claims 1 to 8.

FIG.1

<u>200</u>

210 → Réception d'un mot de code éventuellement erroné

220 → Décodage ECC

230 → Nombre bits erronés ≤ r-1 ?

oui

non

240 → Inversion d'un bit dans le mot de code et, le cas échéant, remise en état du bit inversé au cycle précédent

250 → Maximum nombre de bits à inverser dépassé ?

oui

260 → Erreur non-corrigeable

non

270 → Délivrer les bits de données corrigés

# FIG.2

FIG.3

400

410 — Réception d'un mot de code éventuellement erroné

420 — Décodage ECC

425 — Erreur non-corrigeable ?  **oui**

**non**

430 — Nombre bits erronés ≤ r-1 ?  **oui**

**non**

440 — Inversion d'un bit dans le mot de code et, le cas échéant, remise en état du bit inversé au cycle précédent

450 — Maximum nombre de bits à inverser dépassé ?  **oui**

460 — Erreur non-corrigeable

**non**

470 — Délivrer les bits de données corrigés

# FIG.4

| ECC | Réduction période d'horloge | Réduction surface logique |
|---|---|---|
| (50, 32) TEC | -20% | -45% |
| (51, 32) TEC-QED | -20% | -42% |
| (85, 64) TEC | -22% | -38% |
| (86, 64) TEC-QED | -20% | -37% |
| (152, 128) TEC | -21% | -27% |
| (153, 128) TEC-QED | -19% | -26% |

# FIG.5

FIG.6

**EP 4 614 330 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2021143836 A

**Littérature non-brevet citée dans la description**

- **B. GIRAUD et al.** *Benefits of Design Assist Techniques on Performances and Reliability of a RRAM Macro*
- **N. SUNDBY** ; **D. TAYLOR**. Beyond capacity: storage architecture choices for the modern datacenter. IDC Analyze the Future
- **V. GHERMAN et al.** *Synthesis of Irregular Combinational Functions with Large Don't Care Sets*
- **J. FREUDENBERGER** ; **M. RAJAB** ; **S. SHAVGU-LIDZE**. *A Low-Complexity Three-Error-Correcting BCH Decoder with Applications in Concatenated Codes*